Europäisches Patentamt

European Patent Office

Office européen des brevets

(11) Veröffentlichungsnummer: **0 019 821**
**B1**

# (12) EUROPÄISCHE PATENTSCHRIFT

(45) Veröffentlichungstag der Patentschrift:
. 13.04.83

(21) Anmeldenummer: 80102746.7

(22) Anmeldetag: 17.05.80

(51) . Int. Cl.³: **H 03 K 13/24, H 04 L 3/00**

(54) Verfahren und Anordnung zur Übertragung einer Binärfolge.

(30) Priorität: 31.05.79 DE 2922082

(43) Veröffentlichungstag der Anmeldung:
10.12.80 Patentblatt 80/25

(45) Bekanntmachung des Hinweises auf die Patenterteilung:
13.04.83 Patentblatt 83/15

(84) Benannte Vertragsstaaten:
AT BE CH DE FR GB IT LI LU NL SE

(56) Entgegenhaltungen:
**DE-B-2 237 268**
**US-A-3 414 894**

(73) Patentinhaber: Licentia Patent-Verwaltungs-GmbH,
Theodor-Stern-Kai 1, D-6000 Frankfurt/Main 70 (DE)

(72) Erfinder: Scholz, Werner, Dipl.-Ing., Osterstrasse 20,
D-3007 Gehrden (DE)

(74) Vertreter: Einsel, Robert, Dipl.-Ing., Theodor-Stern-Kai 1,
D-6000 Frankfurt/Main 70 (DE)

## Verfahren und Anordnung zur Übertragung einer Binärfolge

Es ist ein Verfahren zur Übertragung einer Binärfolge bekannt (z. B. Proceedings of IEEE, Juli 1969, Seiten 1314–1316), bei dem die logischen Signale »1« und »0« folgendermaßen definiert sind: Das logische Signal »1« ist als ein Pegelübergang in der Mitte eines Bit-Intervalls dargestellt. Das logische Signal »0« ist als ein Pegelübergang am Ende des zugeordneten Bit-Intervalls dargestellt, sofern ein weiteres Signal logisch »0« unmittelbar folgt. Anderenfalls weist das entsprechende Bitintervall keinen Pegelübergang auf. Dieser bekannte Code hat den Nachteil, daß nur beim Auftreten der Bitfolge ... 101 ... die Zuordnung der Phase des übertragenen Signals zu einem Bit-Intervall-Raster erkennbar ist. Eine Auswerteschaltung für diese Bitfolge ist kompliziert und störanfällig.

Der Erfindung liegt die Aufgabe zugrunde, das bekannte Verfahren zur Übertragung binärer Signale so abzuwandeln, daß eine Identifikation der Phase des übertragenen Signals vereinfacht wird und die Störsicherheit dieser Phasenidentifikation mit geringem Aufwand beliebig erhöht werden kann.

Diese Aufgabe wird durch die im Patentanspruch 1 angegebene Erfindung gelöst.

Vorteilhafte Modulatoren und Demodulatoren zur Durchführung des Verfahrens nach Patentanspruch 1 sind in den Patentansprüchen 2 bis 13 angegeben.

Die Erfindung wird im folgenden anhand der Zeichnung näher erläutert. Es zeigen

Fig. 1 und 2 Gegenüberstellungen von Impulsdiagrammen bei Anwendung des bekannten Verfahrens und des erfindungsgemäßen Verfahrens,

Fig. 3 eine Modulations-Schaltung,

Fig. 4 eine Demodulations-Schaltung und

Fig. 5 Impulsdiagramme zur Erläuterung der Schaltung gemäß Fig. 3 und 4.

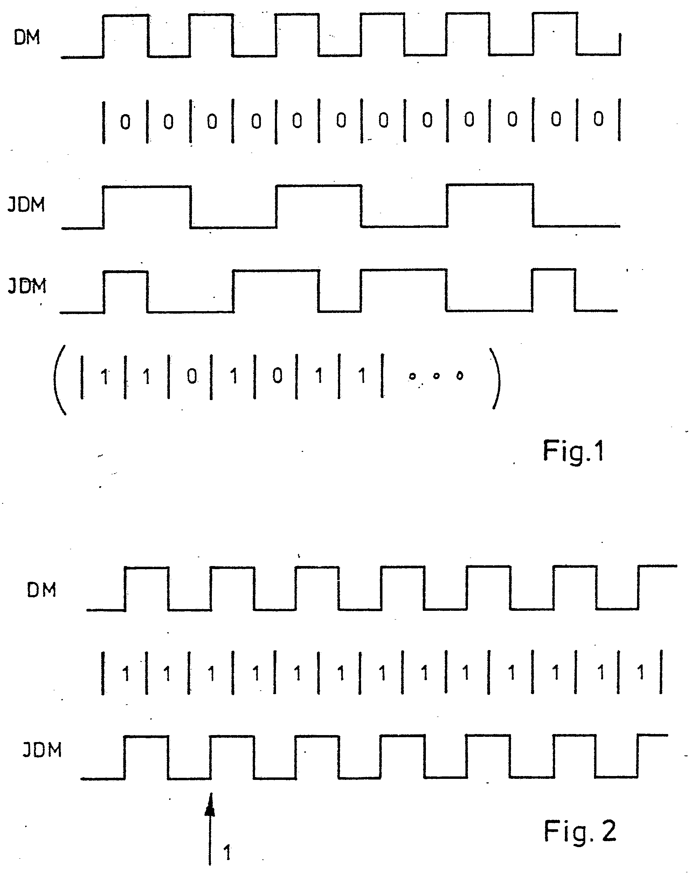

In Fig. 1 ist in der zweiten Zeile eine zu übertragende Binärfolge dargestellt, die ausschließlich logische Zeichen »0« enthält. Über der Binärfolge ist das Übertragungssignal bei Anwendung der bekannten Delay Modulation (DM) wiedergegeben. Unter der Binärfolge sind zwei verschiedene Übertragungssignale dargestellt, die entstehen können, wenn über die Vorschriften der bekannten Delay Modulation hinaus folgende Bedingungen erfüllt werden:

a) Die Abstände der Pegelübergänge dürfen nur ein, eineinhalb und zwei Bit-Intervalle betragen.

b) Es dürfen nie mehr als zwei Pegelübergänge, die einer »0« zugeordnet sind, mit dem Abstand eines Bit-Intervalls aufeinanderfolgen.

Die dargestellten Signale sind mit IDM (Identified Delay Modulation) bezeichnet. In Fig. 2 ist gezeigt, daß das Übertragungssignal für eine Binärfolge, die nur logische Signale »1« enthält, von der obengenannten Vorschrift nicht berührt ist.

Wie die Fig. 1 und 2 zeigen, stimmen die Signale für die Übertragung der beiden dargestellten Binärfolgen bis auf die Phasenverschiebung überein, wenn die bekannte Delay Modulation angewandt wird. Um die übertragenen Binärinformationen identifizieren zu können, ist es erforderlich, das Erscheinen der Bitfolge ... 101 ... abzuwarten, aus der die Phasenbeziehung des Signals zu einem Bit-Intervall-Raster abgeleitet werden kann.

Die in Fig. 1, 2 dargestellten Signale DM und IDM enthalten selbst keine Information über die Phasenbezeichnung zu einem Bit-Raster. Zum Beispiel kann das Signal in der vierten Zeile in Fig. 1 auch als eine unter diesem Signal in Klammern wiedergegebene Binärfolge gedeutet werden, wenn die Phase falsch angenommen wird.

Aufgrund der obenerwähnten zusätzlichen Bedingung bei der Bildung des IDM-Signals kann in Fig. 2 schon nach drei Pegelübergängen die Phase eindeutig definiert werden. Diese Stelle, an der bereits eine eindeutige Identifikation möglich ist, ist in Fig. 2 durch einen Pfeil 1 gekennzeichnet. Drei aufeinanderfolgende Pegelübergänge im Abstand eines Bit-Intervalls sind bei der Übertragung einer Reihe von Nullen nicht möglich, sondern nur wenn drei logische Zeichen »1« hintereinander stehen. Nachdem die Phasenbeziehung des Signals zu einem Bit-Raster nach der Übertragung von drei logischen Zeichen »1« einmal festgestellt ist, sind alle weiteren Zeichen der Binärfolge eindeutig lesbar.

Die Auswertung von den drei gleichartigen Zeichen ... 111 ... läßt sich einfacher realisieren als die Auswertung der Bitfolge ... 101 ... beim bekannten DM-Code. Insbesondere läßt sich die Störsicherheit leicht erhöhen, indem statt drei mehr als drei aufeinanderfolgende Einsen für die Identifikation zugrunde gelegt werden.

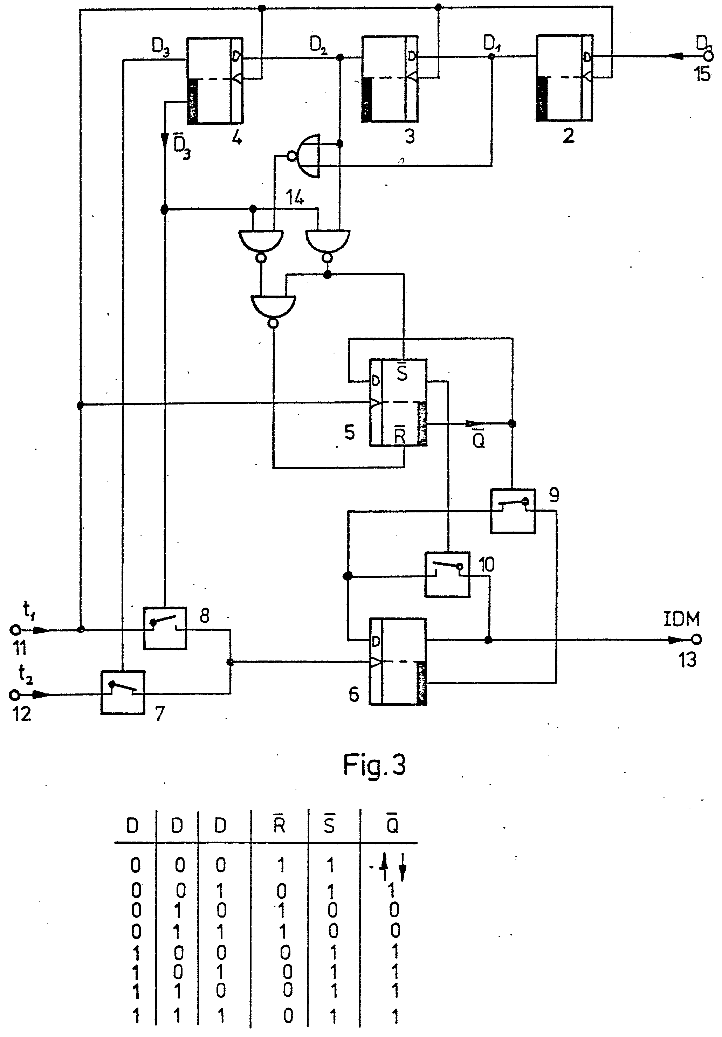

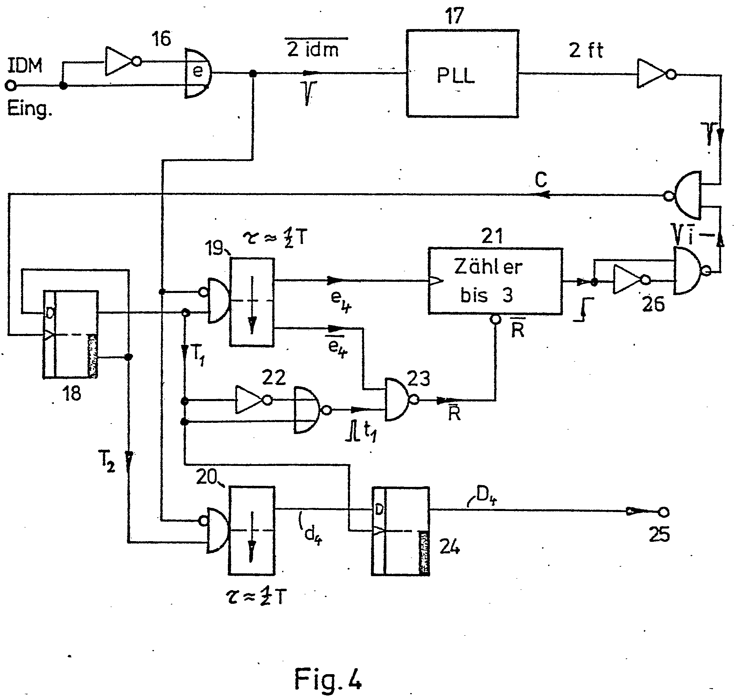

Im folgenden wird anhand der Fig. 3 und 4 eine Modulations- und eine Demodulationsschaltung zur Durchführung des beschriebenen Verfahrens vorgestellt. Diese Schaltungen stellen nur Beispiele dar. Selbstverständlich können diese Schaltungen in Einzelheiten abgewandelt werden, wobei die beschriebenen Bedingungen zugrunde gelegt werden.

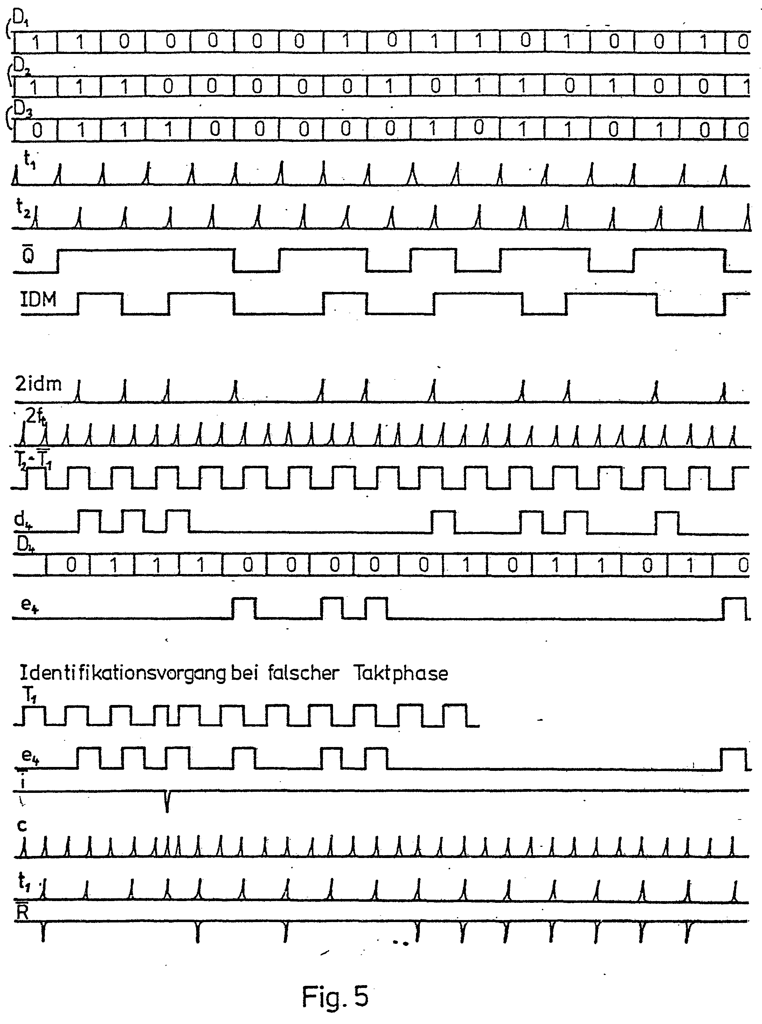

Fig. 3 zeigt eine Modulationsschaltung zur Erzeugung eines IDM-Signals gemäß Fig. 1, dritte Zeile. Zur Erläuterung der Wirkungsweise der Schaltung dienen die Wahrheitstabelle in Fig. 3 unten und die obersten sieben Zeilen der in Fig. 5 wiedergegebenen Signale. Außer dem Eingangssignal (Binärfolge $D_0$ an Eingangsklemme 15, in Fig. 5 nicht dargestellt) benötigt die Schaltung an Eingangsklemmen 11 und 12 zwei Taktsignale $t_1$ und $t_2$ mit der Bitfolge-Frequenz der zu übertragenden Binärfolge. Phasenmäßig liegt $t_1$ zwischen den einzelnen Bits und $t_2$ in der Mitte der Bits. Der eigentliche Modulator besteht aus dem Flip-Flop 6. Die Schalter 7 und 8 werden vom modulierten Signal $D_3$ gesteuert. Die Stellung der Schalter 7 und 8 entscheidet darüber, ob das Flip-Flop 6 in der Mitte oder am ende eines Bitintervalls schaltet. Die Schalter 9 und 10 werden von einem Flip-Flop 5 gesteuert. Von der Stellung der Schalter 9 und 10 hängt es ab, ob das Flip-Flop 6 überhaupt schaltet.

Wenn das Signal $D_3$ den Wert logisch »1« aufweist, so sind die Schalter 7 und 9 geschlossen, d. h. es erfolgt stets eine Schaltung des Flip-Flops 6 in der Mitte des Bitintervalls.

Hat $D_3$ dagegen den Wert logisch »0«, dann ist der Schalter 8 geschlossen. Das hat zur Folge, daß das Flip-Flop 6 am Ende der Bitdauer schaltet. Bei der Betätigung der Schalter 9 und 10 wird berücksichtigt, welche logischen Signale dem im Signal $D_3$ gerade vorliegenden Bit folgen werden. Um die beiden folgenden Bits verfügbar zu machen, ist ein aus Flip-Flops 2 bis 4 gebildetes Schieberegister vorgesehen. Das zu modulierende Signal $D_0$ ist dem Flip-Flop zugeführt und erscheint nach drei Taktschritten als Signal $D_3$ am Ausgang des Flip-Flops 4. Die Signale $D_1$ und $D_2$ an den Ausgängen der Flip-Flops 2 und 3 entsprechen somit den beiden folgenden logischen Signalen. Mittels einer aus Gattern aufgebauten Verknüpfungsschaltung 14 wird aus den Werten dreier aufeinanderfolgender Bits das Flip-Flop 5 gesteuert, welches seinerseits die Schalter 9 und 10 steuert. Die Verknüpfung der Signale ist so ausgeführt, daß die eingangs genannte Bedingung bei der Bildung des IDM-Signals eingehalten wird. Die Abhängigkeit der Steuerspannung $\overline{Q}$ für den Schalter 9 von den Werten $D_1$ bis $D_3$ zeigt die Wahrheitstabelle in Fig. 3 unten. Es ist zu beachten, daß für das Verhalten des Flip-Flops 6 bei einem Taktimpuls $t_1$ der jeweils bis zu diesem Taktimpuls vorhandene Zustand maßgebend ist.

Das auf diese Weise gewonnene IDM-Signal enthält, genauso wie das DM-Signal, Pegelübergänge, die lediglich im Abstand eines Bit-Intervalls, des anderthalbfachen eines Bit-Intervalls und des zweifachen eines Bit-Intervalls auftreten können. Der maximale Gleichspannungsanteil des IDM-Signals ist ebenfalls gleich dem des DM-Signals, nämlich 1/3. Auch das Spektrum des IDM-Signals ist nahezu identisch mit dem Spektrum des DM-Signals. Aus diesem Grunde entsprechen sich auch die Eigenschaften der Signale bei ihrer Übertragung. Der Vorteil des IDM-Signals liegt dagegen in der einfacheren und störfreieren Identifizierbarkeit der beiden Taktphasen $t_1$ und $t_2$ aus dem IDM-Signal selbst. Die Identifizierung der Taktphasen $t_1$ und $t_2$ wird im folgenden anhand der in Fig. 4 gezeigten Demodulationsschaltung gezeigt. Zur Erläuterung der Schaltung in Fig. 4 dienen wiederum die in Fig. 5 wiedergegebenen Signale (Fig. 5, Mitte).

Das IDM-Signal wird zunächst in einem Differenzierer 16 zu einem Signal »2idm« differenziert und frequenzverdoppelt. Aus diesem Signal werden mittels einer PLL-Schaltung 17 Nadelimpulse erzeugt mit der Frequenz $2f_t$. Hieraus werden mit Hilfe eines Flip-Flops 18 gegenphasige Schaltspannungen $T_1$ und $T_2$ gewonnen, die in ihrer Frequenz der Taktfrequenz der übertragenen Binärfolge entsprechen. Es sind zwei Monoflops 19 und 20 vorgesehen, die über vorgeschaltete Torschaltungen von dem Signal 2idm triggerbar sind. Die Torschaltungen der Monoflops werden von den Schaltspannungen $T_1$ und $T_2$ angesteuert. Die Schaltspannungen $T_1$ und $T_2$ sind gegenphasig. Sie bewirken, daß jeweils eines der Monoflops 19 bzw. 20 mit den Impulsen des Signals 2idm getriggert wird. Da die Phasenlage des demodulierten IDM-Signals zu dem Bit-Raster noch nicht identifiziert ist, ist zunächst unbestimmt, welches Monoflop 19 oder 20 die demodulierte Binärfolge an seinem Ausgang abgibt.

Zur Identifikation werden die Ausgangsimpulse $e_4$ des Monoflops 19 in einem nachgeschalteten Zähler 21 gezählt. Der Zähler 21 wird jedesmal zurückgestellt, wenn in eine Taktperiode kein Impuls $e_4$ fällt. Der Rücksetzimpuls $\overline{R}$ zum Zurücksetzen des Zählers wird aus der Schaltspannung $T_1$ mittels eines Differenzierers 22 und eines Gatters 23 gewonnen. Mittels des Zählers 21 wird fortwährend überprüft, ob die zunächst zufällig getroffene Zuordnung der Impulse des Signals 2idm zu den logischen Signalen »0« und »1« zutrifft. Wenn die dem logischen Signal »0« zugeordneten Impulse des Signals 2idm mit der Schaltspannung $T_1$ zusammenfallen und somit das Monoflop 19 durch diese Impulse getriggert wird, so kann der Zähler 21 nie den Wert 3 erreichen. Für den Zähler 21 wird zum Beispiel ein bis drei zählender Zähler verwendet. Die Tatsache, daß der Zähler 21 seinen höchsten Zählerstand nie erreicht, zeigt an, daß die Zuordnung der Schaltspannungen $T_1$ und $T_2$ zu den Impulsen des Signals 2idm richtig getroffen wurde. In diesem Fall enthält das Ausgangssignal $d_4$ am Ausgang des Monoflops 20 die Binärfolge. Mittels eines Flip-Flops 24, das von der Schaltspannung $T_1$ getriggert ist, wird aus dem Signal $d_4$ die ursprüngliche Binärfolge $D_4$ gebildet und der Ausgangsklemme 25 der Demodulationsschaltung zugeführt.

Wenn jedoch der Zähler 21 seinen Endwert 3 erreicht, so ist dies ein Zeichen dafür, daß die Takte $T_1$ und $T_2$ vertauscht sind. In diesem Fall enthält nämlich das Signal $e_4$ die zutreffende Binärfolge. Das dann am Ausgang des Zählers 21 auftretende Signal wird in einer Differenzierschaltung 26 differenziert und als zusätzlicher Impuls $i$ dem Takteingang des Flip-Flops 18 zugeführt. Durch diesen zusätzlichen Taktimpuls erfahren die Schaltspannungen $T_1$ und $T_2$ einen Phasensprung. Nach diesem Phasensprung ist die Zuordnung wieder vertauscht und am Ausgang 25 erscheint die zutreffende Binärfolge. Bei störungsfreiem Betrieb ist nach dem beschriebenen Umschaltvorgang kein weiterer

Identifikationsvorgang erforderlich. Wenn jedoch eine Störung auftritt, kann die Phase jederzeit erneut identifiziert und korrigiert werden.

In Fig. 5 ist in den letzten sechs Zeilen an einem Beispiel dargestellt, welche Impulse bei der Schaltung nach Fig. 4 während des Identifikationsvorganges auftreten, wenn zunächst die falsche Taktphase getroffen wird.

Die in Fig. 4 dargestellte Demodulationsschaltung stellt nur ein Beispiel dar. Die im IDM-Signal enthaltene Information über die Zuordnung der Taktphase kann auch auf andere Weise im IDM-Demodulator ausgenutzt und ausgewertet werden. Bei der Identifikation wird jeweils überprüft, ob mehr als zwei Pegelübergänge im Abstand eines Bitintervalls vorliegen. Wenn bei störungsfreiem Signal wenigstens drei Pegelübergänge im Abstand von einem Bitintervall festgestellt werden, so können diese Pegelübergänge eindeutig dem logischen Binärwert »1« zugeordnet werden. Damit ist die Lage der Pegelübergänge zu einem Bitraster eindeutig festgestellt. Für alle nachfolgenden Pegelübergänge kann dieses Bitraster zugrunde gelegt werden.

Die Identifikation ist erst möglich, wenn drei logische Signale »1« in der übertragenen Binärfolge aufeinanderfolgen. Dieser bereits nach drei aufeinanderfolgenden Einsen abgeschlossene Identifikationsvorgang kann in bezug auf Störsicherheit noch verbessert werden. Werden nur drei aufeinanderfolgende Zeichen ausgewertet, so kann durch Verfälschung eines einzigen Zeichens eine Fehlidentifikation ausgelöst werden, die zur Einstellung der falschen Auswertungsphase führt.

Die Erhöhung der Störsicherheit ist nun bei der beschriebenen IDM sehr einfach durchführbar. Der Zähler 21 für die lückenlos aufeinanderfolgenden Nulldurchgänge braucht nur auf einen höheren Endwert eingestellt zu werden. Dieser Zähler 21 beginnt ja jeweils nach einem fehlenden Nulldurchgang wieder von Null an zu zählen. Die Erhöhung des Zählerendwertes, z. B. auf 8, ist bei der Übertragung von PCM-Tonsignalen mit 14 bzw. 16 bit Auflösung im Zweierkomplement-Code durchaus zulässig. Ein erforderlicher Identifikationsvorgang würde dadurch kaum verzögert werden, da im Bereich der Nulldurchgänge des analogen Tonsignals immer wieder längere Folgen von aufeinanderfolgenden Einsen auftreten. Eine Fehlidentifikation ist bei einem Zahlenendwert von 8 nur dann möglich, wenn zufällig infolge von Störungen mindestens 8 den Nullen zugeordnete Nulldurchgänge lückenlos aufeinanderfolgen. Dieses ist aber bereits sehr unwahrscheinlich (vgl. Fig. 1).

Um eine möglichst schnelle Identifikation zu gewährleisten, kann es vorteilhaft sein, eine Folge von logischen »1«-Zeichen der Binärfolge voranzusetzen oder eine solche Folge in einem Rahmensignal, das z. B. zur Abgrenzung eines Codewortes der Binärfolge dient, vorzusehen. Hierbei kann auch eine höhere Anzahl von aufeinanderfolgenden logischen Einsen vorgesehen werden (z. B. 4 oder 8), wobei der Zähler 21 für einen entsprechend höheren Endwert ausgelegt werden kann. Auf diese Weise wird erreicht, daß die einmal richtiggestellte Auswertungsphase kaum noch durch Störimpulse beeinflußt werden kann, so lange die PLL-Schaltung nicht außer Tritt fällt.

Es ist auch möglich, die Zuordnung der Zeichen »1« und »0« zu den Pegelübergängen zu vertauschen. Dabei wäre das Zeichen »1« als ein Pegelübergang am Ende des Bit-Intervalls dargestellt, sofern ein weiteres Zeichen logisch »1« folgt. Das Zeichen »0« würde einem Pegelübergang in der Mitte eines Bit-Intervalls entsprechen. Die Zuordnung der beiden binären Zeichen zu den Pegelübergängen kann beispielsweise durch die Vorschaltung eines Inverters vor den Modulator und eines Inverters hinter den Demodulator ohne weiteres vertauscht werden. Grundsätzlich gilt, daß die den beiden binären Zeichen zugeordneten Pegelübergänge jeweils eine feste Phase in bezug auf das Bit-Intervall haben, wobei sich die Phasen dieser verschiedenen zugeordneten Pegelübergänge um ein halbes Bit-Intervall unterscheiden.

Die Aussage über Mitte und Ende des Bit-Intervalls in dieser Anmeldung sind nicht als absolut zu betrachten. Sie soll vielmehr nur aussagen, daß die Phasen der den beiden binären Zeichen zugeordneten Pegelübergänge sich zueinander um ein halbes Bit-Intervall unterscheiden.

Daß die absolute Phase unterschiedlich ausfallen kann, sei am Beispiel der Modulationsschaltung in Fig. 3 verdeutlicht: Die gleichphasigen Binärfolgen $D_1$, $D_2$ und $D_3$ müssen mit der Phase der Binärfolge $D_0$ nicht übereinstimmen. Man wird das Taktsignal $t_1$ so wählen, daß die Taktimpulse etwa in die Mitte der Bit-Intervalle der Binärfolge $D_0$ fallen, um eine korrekte Übernahme der Binärfolge $D_0$ in das Schieberegister 2, 3, 4 zu gewährleisten. Dadurch ergibt sich allein schon an dieser Stelle eine Verschiebung der absoluten Phase um etwa ein halbes Bit-Intervall.

**Patentansprüche**

1. Verfahren zur Übertragung einer Binärfolge, bei dem das binäre Zeichen »1« im Übertragungssignal als ein Pegelübergang in der Mitte eines Bit-Intervalls dargestellt ist und bei dem das binäre Zeichen »0« als ein Pegelübergang am Ende des Bit-Intervalls dargestellt ist, sofern ein weiteres Zeichen logisch »0« folgt, dadurch gekennzeichnet, daß die Pegelübergänge, die dem Zeichen logisch »0« zugeordnet sind, zum Teil derart unterdrückt werden, daß ein Signal gebildet wird, das folgende Bedingungen erfüllt:

a) Die Abstände der Pegelübergänge dürfen höchstens zwei Bit-Intervalle betragen.

b) Es dürfen nicht mehr als zwei Pegelübergänge, die dem logischen Zeichen »0« zugeordnet sind, mit dem Abstand eines Bit-Intervalls aufeinanderfolgen.

2. Modulator zur Durchführung des Verfahrens nach Anspruch 1, dadurch gekennzeichnet, daß bei der Bildung des die Binärfolge enthaltenden Übertragungssignals jeweils das nächste und übernächste zu übertragende Binärzeichen berücksichtigt wird.

3. Modulator nach Anspruch 2, dadurch gekennzeichnet, daß der Modulator ein Schieberegister (2, 3, 4) aufweist, in das durch Taktimpulse ($t_1$) die Binärfolge ($D_0$) eingelesen wird, und daß mit den Stufen (2, 3, 4) des Schieberegisters ein Verknüpfungsschaltwerk (14) gekuppelt ist, von dessen Ausgang die Modulation gesteuert wird.

4. Modulator nach Anspruch 3, dadurch gekennzeichnet, daß zur Modulation ein getaktetes Flip-Flop (6) verwendet wird, dem je nach vorliegendem Binärzeichen ein Impuls einer ersten dem Zeichen »0« zugeordneten Impulsfolge ($t_2$) oder ein Impuls einer zweiten dem Zeichen »1« zugeordneten Impulsfolge ($t_1$) zugeführt wird (Schalter 7 bzw. 8), und daß durch das Ausgangssignal ($\bar{Q}$) der Verknüpfungsschaltung vorgegeben wird, ob das Flip-Flop (6) durch den erhaltenen Taktimpuls ($t_1$, $t_2$) beeinflußt wird oder nicht.

5. Modulator nach Anspruch 4, dadurch gekennzeichnet, daß das Flip-Flop ein D-Flip-Flop (6) ist und daß die Ausgänge des D-Flip-Flops (6) über elektronische Schalter (9, 10) so mit dem D-Eingang des D-Flip-Flops (6) kuppelbar sind, daß bei einem Taktimpuls ($t_1$), der dem Zeichen »0« zugeordnet ist, der vor dem Taktimpuls ($t_1$) vorhandene Zustand des Flip-Flops (6) dafür maßgebend ist, ob das Flip-Flop (6) seinen Zustand ändert oder nicht.

6. Demodulator zur Durchführung des Verfahrens nach Anspruch 1, dadurch gekennzeichnet, daß bei jedem Pegelübergang ein Impuls (2idm) gebildet wird, daß in einer Regenerierschaltung (17) eine der doppelten Taktfrequenz der Binärfolge ($D_0$) entsprechende Impulsfolge ($2f_t$) gebildet wird, daß aus der Impulsfolge ($2f_t$) zur Bildung des Bit-Rasters zwei der Taktfrequenz der Binärfolge entsprechende, gegenphasige Schaltspannungen ($T_1$, $T_2$) gebildet werden, die als Torsignale für die von den Pegelübergängen abgeleiteten Impulse (2idm) dienen, und daß in einer Identifikationsschaltung (19, 21 bis 23) die Zuordnung der Schaltspannungen ($T_1$, $T_2$) zu dem von den Pegelübergängen abgeleiteten Impulsen (2idm) daran erkannt wird, ob drei oder mehr Impulsübergänge im Abstand eines Bit-Intervalls vorkommen.

7. Demodulator nach Anspruch 6, dadurch gekennzeichnet, daß die Identifikationsschaltung mit einem bis drei zählenden Zähler (21) aufgebaut ist.

8. Demodulator nach Anspruch 6, dadurch gekennzeichnet, daß die Identifikationsschaltung zum Zwecke der Störbefreiung mit einem bis mehr als drei zählenden Zähler (21) aufgebaut ist.

9. Demodulator nach Anspruch 8, dadurch gekennzeichnet, daß dieser Schaltung ein Signal zugeführt wird, das in regelmäßigen Abständen eine für den Identifikationsvorgang geeignete Bitfolge enthält, indem z. B. das Bitmuster für eine Rahmenerkennung aus einer genügend großen Anzahl von aufeinanderfolgenden Einsen besteht.

10. Demodulator nach Anspruch 7, dadurch gekennzeichnet, daß der Zähler (21) durch jeden Impuls der von den Pegelübergängen abgeleiteten Impulse (2idm), der in die der Identifikationsschaltung zugeordnete Torzeit ($T_1$) fällt, um eins weitergeschaltet wird und in den Bit-Intervallen, in denen kein Impuls (2idm) in diese Torzeit fällt, auf seinen Ausgangszustand zurückgestellt wird.

11. Demodulator nach Anspruch 7, dadurch gekennzeichnet, daß zwei monostabile Kippstufen (19, 20) vorgesehen sind, deren Triggereingängen über je eine Torschaltung die von den Pegelübergängen abgeleiteten Impulse (2idm) zuführbar sind, daß die Torschaltung der einen monostabilen Kippstufe (19) von einer der Schaltspannungen ($T_1$) und die Torschaltung der anderen monostabilen Kippschaltung (20) von der anderen Schaltspannung ($T_2$) gesteuert sind, daß mit dem Ausgang eines der monostabilen Kippschaltungen (19) die Identifikationsschaltung (21−23) verbunden ist und vom Ausgang der anderen monostabilen Kippschaltung (20) die demodulierte Binärfolge abgeleitet wird und daß von der Identifikationsschaltung die Phase der Schaltspannungen umgeschaltet wird, wenn mehr als eine vorgegebene Anzahl n von Pegelübergängen ($n \geq 3$) mit dem Abstand eines Bit-Intervalls erkannt werden.

12. Demodulator nach einem der Ansprüche 6 bis 11, dadurch gekennzeichnet, daß die gegenphasigen Schaltspannungen ($T_1$ und $T_2$) aus der doppelten Taktfrequenz ($2f_t$) mit Hilfe eines Flip-Flops (18) erzeugt werden und daß bei falscher Zuordnung der beiden Schaltspannungen ($T_1$, $T_2$) die Identifikationsschaltung einen zusätzlichen Impuls (i) auf den Takteingang des Flip-Flops (18) gibt, so daß die Phasen der Schaltspannungen ($T_1$, $T_2$) an den Ausgängen des Flip-Flops (18) vertauscht werden.

13. Verfahren zur Übertragung einer Binärfolge nach Anspruch 1, dadurch gekennzeichnet, daß die Zuordnung der binären Zeichen »0« und »1« zu der Lage der Pegelübergänge vertauscht ist, wobei durch Unterdrückung von Pegelübergängen, die dem Zeichen logisch »1« zugeordnet sind, ein Signal gebildet wird, das folgende Bedingungen erfüllt:

a) Die Abstände der Pegelübergänge dürfen höchstens zwei Bit-Intervalle betragen.

b) Es dürfen nicht mehr als zwei Pegelübergänge, die dem logischen Zeichen »1« zugeordnet sind, mit dem Abstand eines Bit-Intervalls aufeinanderfolgen.

## Claims

1. Method for the transmission of a binary sequence in which the binary signal »1« in the transmission signal is represented as a value change in the middle of a bit-interval and in which the binary signal »0« is represented as a value change at the end of the bit-interval, provided that a further logical signal »0« follows, characterised in that the value changes with are associated with the logical signal »0« are in part suppressed so that a signal is produced which fulfils the following conditions:

a)  The spacings of the value changes should amount at the most to two bit-intervals.

b)  No more than two value changes with the spacing of one bit-interval, which are associated with the logical signal »0«, should follow one another.

2. Modulator for carrying out the method according to Claim 1, characterised in that in the formation of the transmission signal containing the binary sequence regard is had respectively to the first and next following binary signal to be transmitted.

3. Modulator according to Claim 2 characterised in that the modulator comprises a shift register (2, 3, 4) in which the binary sequence $(D_0)$ is entered by means of reference impulses $(t_1)$ and that, coupled with the stages (2, 3, 4) of the shift register, there is a combining switch assembly from the output of which the modulation is controlled.

4. Modulator according to Claim 3 characterised in that an impulsed flip-flop (6) is used for the modulation, to which is applied, depending on each preceding binary signal, an impulse from a first impulse sequence $(t_2)$ associated with the signal »0« or an impulse from a second impulse sequence $(t_1)$ associated with the signal »1« (switch 7 or 8), and that by means of the output signal $(\bar{Q})$ of the combining switch assembly it is determined whether or not the flip-flop (6) is influenced by the received reference impulse $(t_1, t_2)$.

5. Modulator according to Claim 4, characterised in that the flip-flop is a D-flip-flop (6) and that the outputs of the D-flip-flop can be coupled with the D-input of the D-flip-flop (6) by way of electronic switches (9, 10) so that in the case of a reference impulse $(t_1)$ which is associated with the signal »0«, the condition of the flip-flop (6) existing before the reference impulse $(t_1)$ determines whether the flip-flop (6) alters its condition or not.

6. Demodulator for carrying out the method according to Claim 1, characterised in that on the occurrence of each value change an impulse (2idm) is produced, that an impulse sequence $(2f_t)$ is produced an a regenerative circuit (17) having double the reference frequency of the binary sequence $(D_0)$, that for the production of the bit-raster two switching voltages $(T_1, T_2)$ of opposite phases and corresponding to the reference frequency of the binary sequence are produced from the impulse sequence $(2f_t)$, which switching voltages serve as gating signals for the impulses (2idm) which are derived from the value changes, and that the relationship of the switching voltages $(T_1, T_2)$ to the impulses (2idm) derived from the value changes are recognised in an identification circuit (19, 21 – 23) to determine whether three or more impulse changes occur with the spacing of a bit-interval.

7. Demodulator according to Claim 6, characterised in that the identification circuit is constructed with a counter (21) which counts up to three.

8. Demodulator according to Claim 6, characterised in that the identification circuit is constructed with a counter (21) which counts to more than three for the purpose of achieving freedom from disturbance.

9. Demodulator according to Claim 8, characterised in that a signal is applied to this circuit which in regular spaces contains a bit sequence suitable for the identification process, in that for example the bit pattern for a frame recognition consists of a sufficiently large number of successive ones.

10. Demodulator according to Claim 7, characterised in that the counter (21) is advanced by one in response to each of the impulses (2idm), themselves derived from the value changes, occurring in the gate time $(T_1)$ associated with the identification circuit, and is restored to its end condition in the bit-intervals in which no impulse (2idm) occurs in this gate time.

11. Demodulator according to Claim 7, characterised in that two monostable Kipp stages (19, 20) are provided, to the trigger inputs of which the impulses (2idm), which are derived from the value changes, can be applied in each case by way of a gate circuit, that the gate circuit of one of the monostable Kipp stages (19) is controlled by one of the switching voltages $(T_1)$ and the gate circuit of the other monostable Kipp circuit (20) is controlled by the other switching voltage $(T_2)$, that the identification circuit (21 – 23) is coupled with the output of one of the monostable Kipp circuits (19) and the demodulated binary sequence is derived from the output of the other monostable Kipp circuit, and that the phase of the switching voltages is changed over by the identification circuit, if more than a predetermined number n of value changes $(\geq 3)$ are recognised having the spacing of one bit-interval.

12. Demodulator according to any one of the claims 6 to 11, characterised in that the antiphase switching voltages $(T_1$ and $T_2)$ are derived from the doubled reference frequency $(2f_t)$ with the aid of a flip-flop (18) and that in the case of an incorrect relationship of the two switching voltages $(T_1, T_2)$ the identification circuit delivers an additional impulse (i) to the reference input of the flip-flop (18), so that the phases of the

switching voltages ($T_1$, $T_2$) are interchanged at the outputs of the flip-flop (18).

13. Method for the transmission of a binary sequence according to Claim 1, characterised in that the relationship of the binary signals »0« and »1« to the position of the value changes is interchanged, so that as a result of the suppression of value changes which are associated with logical signals »1« a signal is produced which fulfils the following conditions:

a) The spacings of the value changes should amount at the most to two bit-intervals.

b) No more than two value changes with the spacing of one bit-interval, which are associated with the logical signal »1«, should follow one another.

**Revendications**

1. Procédé de transmission d'une séquence binaire, dans lequel le caractère binaire »1« est représenté par une transition de niveau au milieu d'un intervalle significatif et le caractère binaire »0« par une transition de niveau à la fin de l'intervalle significatif, dans la mesure où un autre caractère logique »0« suit, ledit procédé étant caractérisé en ce que les transitions de niveau affectées au caractère logique »0« sont partiellement supprimées, de façon à former un signal satisfaisant aux conditions suivants:

a) les distances maximales entre les transitions de niveau sont de deux intervalles significatifs; et

b) jamais plus de deux transitions de niveau affectées au caractère logique »0« ne doivent se suivre avec une distance égale à un intervalle significatif.

2. Modulateur pour la mise en œuvre du procédé selon revendication 1, caractérisé en ce que le premier et le second caractère binaire à transmettre sont pris en considération pour la formation du signal transmis contenant la séquence binaire.

3. Modulateur selon revendication 2, caractérisé en ce que le modulateur comporte un registre à décalage (2, 3, 4), dans lequel la séquence binaire ($D_0$) est introduite par des impulsions d'horloge ($t_1$); et les étages (2, 3, 4) du registre à décalage sont reliés à un circuit de combinaison et de commutation (14), dont la sortie commande la modulation.

4. Modulateur selon revendication 3, caractérisé en ce qu'une bascule (6) cadencée est utilisée pour la modulation et reçoit, selon le caractère binaire présent, une impulsion d'une première séquence ($t_2$) affectée au caractère »0« ou une impulsion d'une seconde séquence ($t_1$) affectée au caractère »1« (interrupteur 7 ou 8); et le signal de sortie ($\bar{Q}$) du circuit combinatoire détermine si la bascule (6) est influencée ou non par l'impulsion d'horloge reçue ($t_1$, $t_2$).

5. Modulateur selon revendication 4, caractérisé en ce que la bascule est une bascule D (6); et les sorties de la bascule D (6) sont connectées par des interrupteurs électroniques (9, 10) à l'entrée D de la bascule D (6) de façon que pour une impulsion d'horloge ($t_1$) affectée au caractère »0«, l'état de la bascule (6) précédant l'impulsion d'horloge ($t_1$) détermine si la bascule (6) modifie son état ou non.

6. Démodulateur pour la mise en œuvre du procédé selon revendication 1, caractérisé en ce qu'une impulsion (2idm) est produite à chaque transition de niveau; un circuit régénérateur (17) délivre une séquence d'impulsions ($2f_t$) correspondant au double de la fréquence d'horloge de la séquence binaire ($D_0$); pour la production de la trame de bits, deux tensions de commutation ($T_1$, $T_2$) en opposition de phase et correspondant à la fréquence d'horloge de la séquence binaire sont produites et constituent les signaux de portillonnage des impulsions (2idm) dérivées des transitions de niveau; et un circuit d'identification (19, 21 à 23) détermine l'affectation des tensions de commutation ($T_1$, $T_2$) aux impulsions (2idm) dérivées des transitions de niveau par la présence ou non de trois transitions d'impulsion ou plus à distance d'un intervalle significatif.

7. Démodulateur selon revendication 6, caractérisé en ce que le circuit d'identification est constitué avec un compteur (21) comptant de 1 à 3.

8. Démodulateur selon revendication 6, caractérisé en ce que le circuit d'identification est constitué par un compteur (21) comptant de 1 à plus de trois, afin d'éliminer les perturbations.

9. Démodulateur selon revendication 8, caractérisé par l'application audit circuit d'un signal qui, à intervalles réguliers, contient une séquence binaire appropriée à l'opération d'identification, le profil binaire étant par exemple constitué par un nombre suffisamment élevé de »1« successifs pour l'identification du cadre.

10. Démodulateur selon revendication 7, caractérisé en ce que le compteur (21) progresse d'un pas pour chacune des impulsions (2idm) dérivées des transitions de niveau et tombant dans le temps de portillonnage ($T_1$) affecté au circuit d'identification, et est ramené dans son état initial dans les intervalles significatifs où aucune impulsion (2idm) n'apparaît pendant ce temps de portillonnage.

11. Démodulateur selon revendication 7, caractérisé en ce que deux bascules monostables (19, 20) sont prévues, dont les entrées de déclenchement reçoivent chacune par un opérateur les impulsions (2idm) dérivées des transitions de niveau; l'opérateur d'une bascule monostable (19) est commandé par une des tensions de commutation ($T_1$) et l'opérateur de la seconde bascule monostable (20) par la seconde tension de commutation ($T_2$); la sortie d'une bascule monostable (19) est reliée au circuit d'identification (21 – 23) et la séquence binaire démodulée est obtenue sur la sortie de la seconde bascule monostable (20); et le circuit d'identification inverse la phase des tensions de commutation quand le nombre de transitions de niveau décelé avec une distance égale à un intervalle significatif est supérieur à un nombre n prédéterminé (n ≥ 3).

12. Démodulateur selon une quelconque des revendications 6 à 11, caractérisé en ce que les tensions de commutation en opposition de phase ($T_1$ et $T_2$) sont produites à partir du double de la fréquence d'horloge ($2f_t$), à l'aide d'une bascule 18; et le circuit d'identification délivre, en cas d'affectation incorrecte des deux tensions de commutation ($T_1$, $T_2$) une impulsion supplémentaire (î) à l'entrée d'horloge de la bascule (18), de façon à permuter les phases des tensions de commutation ($T_1$, $T_2$) sur les sorties de la bascule (18).

13. Procédé de transmission d'une séquence binaire selon revendication 1, caractérisé en ce que l'affectation des caractères binaires »0« et »1« à la position des transitions de niveau est permutée, un signal satisfaisant aux conditions suivantes étant produit par suppression des transitions de niveau affectées au caractère logique »1«:

a) la distance maximale admissible entre transitions de niveau est de deux intervalles significatifs; et

b) jamais plus de deux transitions de niveau affectées au caractère logique »1« ne doivent se succéder avec une distance égale à un intervalle significatif.

DM

| 0 | 0 | 0 | 0 | 0 | 0 | 0 | 0 | 0 | 0 | 0 | 0 |

JDM

JDM

$\left( \; | \; 1 \; | \; 1 \; | \; 0 \; | \; 1 \; | \; 0 \; | \; 1 \; | \; 1 \; | \; \circ \; \circ \; \circ \; \right)$

Fig.1

DM

| 1 | 1 | 1 | 1 | 1 | 1 | 1 | 1 | 1 | 1 | 1 | 1 | 1 |

JDM

1

Fig. 2

Fig.3

| D | D | D | $\bar{R}$ | $\bar{S}$ | $\bar{Q}$ |
|---|---|---|---|---|---|
| 0 | 0 | 0 | 1 | 1 | ↑ ↓ |
| 0 | 0 | 1 | 0 | 1 | 1 |
| 0 | 1 | 0 | 1 | 1 | 0 |
| 0 | 1 | 1 | 1 | 0 | 0 |
| 1 | 0 | 0 | 0 | 1 | 1 |
| 1 | 0 | 1 | 0 | 1 | 1 |
| 1 | 1 | 0 | 0 | 1 | 1 |
| 1 | 1 | 1 | 0 | 1 | 1 |

11

Fig. 4

Fig. 5